(19) Europäisches Patentamt
European Patent Office
Office européen des brevets

(11) **EP 4 040 788 A1**

(12) **EUROPEAN PATENT APPLICATION**
published in accordance with Art. 153(4) EPC

(43) Date of publication:
**10.08.2022 Bulletin 2022/32**

(21) Application number: **20871316.4**

(22) Date of filing: **11.09.2020**

(51) International Patent Classification (IPC):
**H04N 13/366** (2018.01)     **H04N 13/31** (2018.01)
**H04N 13/346** (2018.01)     **H04N 13/363** (2018.01)

(52) Cooperative Patent Classification (CPC):
**B60K 35/00; B60R 11/02; G02B 27/01;
G03B 15/00; G03B 35/24; G09G 5/00; G09G 5/36;
G09G 5/38; H04N 13/31; H04N 13/346;
H04N 13/363; H04N 13/366**

(86) International application number:
**PCT/JP2020/034565**

(87) International publication number:
**WO 2021/065427 (08.04.2021 Gazette 2021/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2019 JP 2019179694**

(71) Applicant: **Kyocera Corporation
Kyoto-shi Kyoto 612-8501 (JP)**

(72) Inventors:
• **MURATA, Mitsuhiro**
  **Kyoto-shi, Kyoto 612-8501 (JP)**
• **KUSAFUKA, Kaoru**
  **Kyoto-shi, Kyoto 612-8501 (JP)**
• **OGURA, Kenji**
  **Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **CAMERA, HEAD-UP DISPLAY SYSTEM, AND MOBILE BODY**

(57)     A camera includes an image sensor, a signal processor, and an output unit. The image sensor obtains a first image being a subject image including an eye of a user of a head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display.

FIG. 3

**Description**

**FIELD**

The present disclosure relates to a camera, a head-up display system, and a movable obj ect.

**BACKGROUND**

A known technique is described in, for example, Patent Literature 1.

**CITATION LIST**

**PATENT LITERATURE**

Patent Literature 1: WO 2018/142610

**BRIEF SUMMARY**

A camera according to an aspect of the present disclosure includes an image sensor, a signal processor, and an output unit. The image sensor obtains a first image being a subject image including an eye of a user of a head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display.

A head-up display system according to an aspect of the present disclosure includes a camera and a head-up display. The camera includes an image sensor, a signal processor, and an output unit. The image sensor obtains a first image being a subject image including an eye of a user of the head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display. The head-up display includes a display panel, an optical element, an optical system, a receiver, and a processor. The display panel displays a display image. The optical element defines a traveling direction of image light emitted from the display panel. The optical system directs the image light traveling in the traveling direction defined by the optical element toward the eye of the user and projects a virtual image of the display image in a field of view of the user. The receiver receives the second image output from the output unit. The processor causes the display panel to display the display image including a first display image and a second display image having parallax between the first display image and the second display image. The processor changes, based on a position of the eye of the user detected using the second image received from the camera, an area on the display panel on which the first display image is displayed and an area on the display panel on which the second display image is displayed.

A movable object according to an aspect of the present disclosure includes a head-up display system. The head-up display system includes a camera and a head-up display. The camera includes an image sensor, a signal processor, and an output unit. The image sensor obtains a first image being a subject image including an eye of a user of the head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display. The head-up display includes a display panel, an optical element, an optical system, a receiver, and a processor. The display panel displays a display image. The optical element defines a traveling direction of image light emitted from the display panel. The optical system directs the image light traveling in the traveling direction defined by the optical element toward the eye of the user and projects a virtual image of the display image in a field of view of the user. The receiver receives the second image output from the output unit. The processor causes the display panel to display the display image including a first display image and a second display image having parallax between the first display image and the second display image. The processor changes, based on a position of the eye of the user detected using the second image received from the camera, an area on the display panel on which the first display image is displayed and an area on the display panel on which the second display image is displayed.

**BRIEF DESCRIPTION OF DRAWINGS**

The objects, features, and advantages of the present disclosure will become more apparent from the following detailed description and the drawings.

FIG. 1 is a diagram of an example head-up display (HUD) system mounted on a movable object.

FIG. 2 is a schematic diagram of a camera shown in FIG. 1.

FIG. 3 is a flowchart of a process performed by a digital signal processor shown in FIG. 2.

FIG. 4 is a diagram describing an image captured by the camera.

FIG. 5 is a schematic diagram of a HUD shown in FIG. 1.

FIG. 6 is a diagram of an example display panel shown in FIG. 5 viewed in a depth direction.

FIG. 7 is a diagram of an example parallax barrier shown in FIG. 5 viewed in the depth direction.

FIG. 8 is a diagram describing the relationship between a virtual image and a user's eyes shown in FIG. 1.

FIG. 9 is a diagram describing example display of subpixels in a virtual image corresponding to the display panel.

FIG. 10 is a diagram describing example display of subpixels in a virtual image corresponding to the display panel.

FIG. 11 is a diagram of another example HUD system.

FIG. 12 is a schematic diagram of a camera shown in FIG. 11.

**DETAILED DESCRIPTION**

As a head-up display (HUD) system with the structure that forms the basis of a HUD system according to one or more embodiments of the present disclosure, a known HUD system delivers images having parallax between them to the left and right eyes of a user, and projects a virtual image in the user's field of view to be viewed as a three-dimensional (3D) image with depth.

To allow the user to view appropriate images with the left and right eyes, the HUD system for displaying 3D images includes a camera for detecting the positions of the user's eyes. The camera is to track the varying positions of the user's eyes in real time. The camera may also serve as a driver monitoring camera for monitoring the movement of the driver's head, eyelids, or both.

The camera used for the HUD system is to detect the eye positions with high detection performance.

One or more embodiments of the present disclosure will now be described with reference to the drawings. The drawings used herein are schematic and are not drawn to scale relative to the actual size of each component.

Overview of HUD System

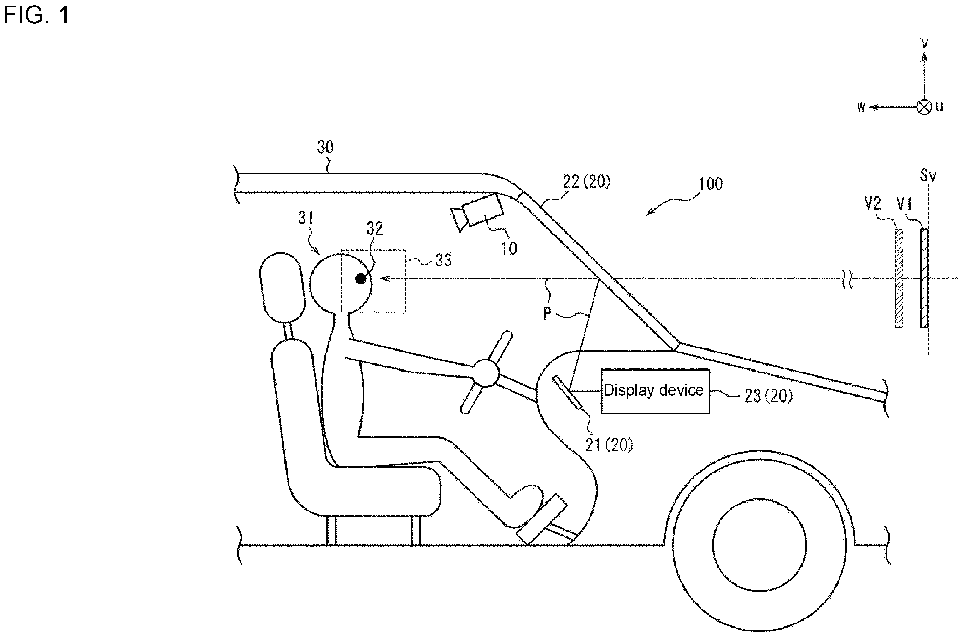

As shown in FIG. 1, a HUD system 100 according to an embodiment of the present disclosure includes a camera 10 and a HUD 20. The HUD system 100 may be mounted on a movable object 30.

The HUD system 100 causes image light emitted from a display device 23 in the HUD 20 to travel toward eyes 32 of a user 31, as described in detail below. The HUD system 100 thus displays a virtual image in the field of view of the user 31. The HUD system 100 has an area within which the virtual image displayable by the HUD 20 is viewable by the eyes of the user 31. The area within which the virtual image displayable by the HUD 20 is viewable by the eyes of the user 31 is referred to as an eyebox area 33. With the eyes 32 outside the eyebox area 33, the user 31 cannot view the virtual image displayable by the HUD 20.

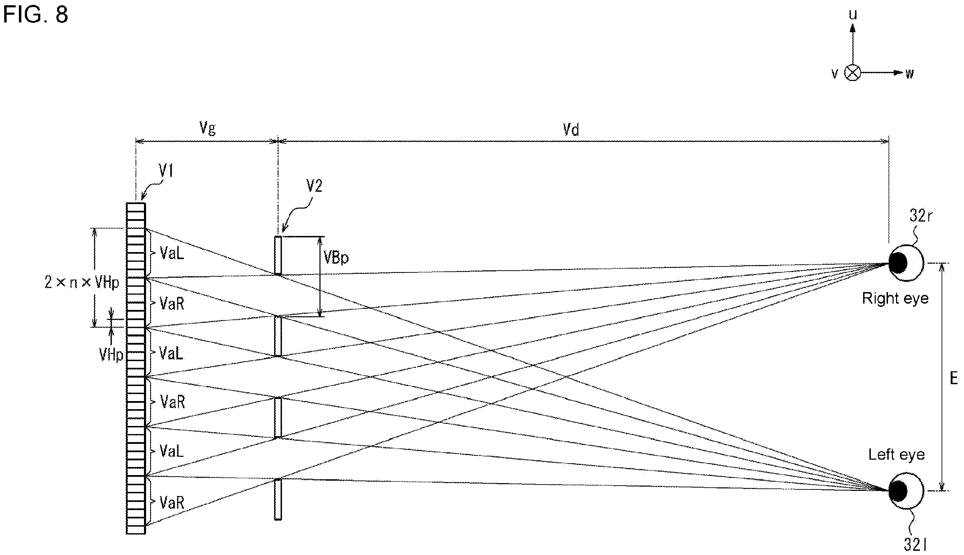

In FIG. 1 as well as FIG. 8 referred to below, u-direction refers to an interocular direction, or the direction of a line passing through a left eye 32l and a right eye 32r of the user 31, w-direction refers to the front-rear direction as viewed from the user 31, and v-direction refers to the height direction orthogonal to u-direction and w-direction.

Camera

The HUD system 100 includes the camera 10 to detect the positions of the eyes 32 of the user 31 observing a 3D image. The eyes 32 of the user 31 include the left eye 32l (first eye) and the right eye 32r (second eye) of the user 31. The left eye 32l and the right eye 32r of the user 31 may herein be collectively referred to as the eyes 32 without being distinguished from each other. The camera 10 outputs an image including the eyes 32 of the user 31 to the HUD 20. For the HUD system 100 mounted on a vehicle as the movable object 30, the user 31 may be a driver of the movable object 30.

For the HUD system 100 mounted on a vehicle as the movable object 30, the camera 10 may be attached to a room mirror. The camera 10 may be attached to, for example, an instrument cluster. The camera 10 may be attached to a center panel. The camera 10 may be attached to a support of the steering wheel at the center of the steering wheel. The camera 10 may be attached to a dashboard.

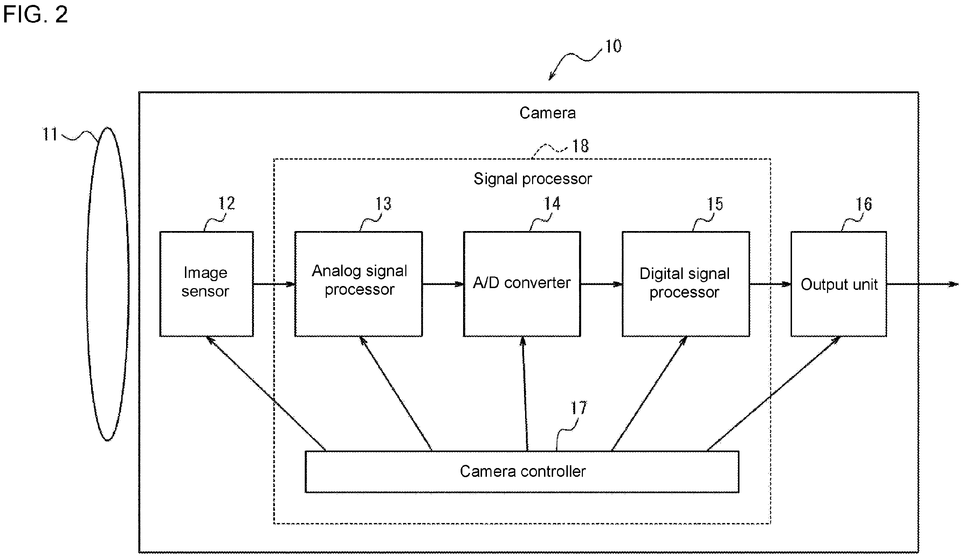

As shown in FIG. 2, the camera 10 in an embodiment includes a lens 11, an image sensor 12, an analog signal processor 13, an analog-digital (A/D) converter 14, a digital signal processor 15, an output unit 16, and a camera controller 17. The analog signal processor 13, the A/D converter 14, the digital signal processor 15, and the camera controller 17 are also collectively referred to as a signal processor 18. The processing performed by the analog signal processor 13, the A/D converter 14, the digital signal processor 15, and the camera controller 17 can also be referred to as the processing performed by the signal processor 18. The signal processor 18 can also be referred to as a signal processing circuit.

The lens 11 forms a subject image including the eyes 32 of the user 31 of the HUD 20 on the light-receiving surface of the image sensor 12. The lens 11 may include one or more lenses.

The image sensor 12 photoelectrically converts, in units of pixels, the subject image formed on the light-receiving surface and obtains signals for the respective pixels to obtain a first image. The image sensor 12 can output the first image as electrical signals. The image sensor 12 may include, for example, a charge-coupled device (CCD) image sensor or a complementary metal-oxide semiconductor (CMOS) image sensor. The first image has a resolution that allows detection of the pupil positions of the eyes 32 of the user 31.

The analog signal processor 13 includes an analog signal processing circuit. The analog signal processor 13 can perform various types of analog signal processing on analog signals representing the first image obtained by the image sensor 12. The analog signal processing may include correlated double sampling and amplification.

The A/D converter 14 includes an analog-digital converter circuit for converting analog signals resulting from the analog signal processing with the analog signal processor 13 into digital signals. The digital first image output from the A/D converter 14 may be stored in a memory incorporated in the camera 10. The analog signal processor 13 and the A/D converter 14 may be incorporated in the image sensor 12.

The digital signal processor 15, or a DSP, includes a processor for digital signal processing. The digital signal processor 15 prestores information about an area expressed using two-dimensional coordinates captured by the camera 10 resulting from conversion of the eyebox area 33 expressed in a 3D space. The converted eyebox area 33 in the image captured by the camera 10 is referred to as an area including the eyebox area 33. The digital signal processor 15 may include a memory for storing the area including the eyebox area 33.

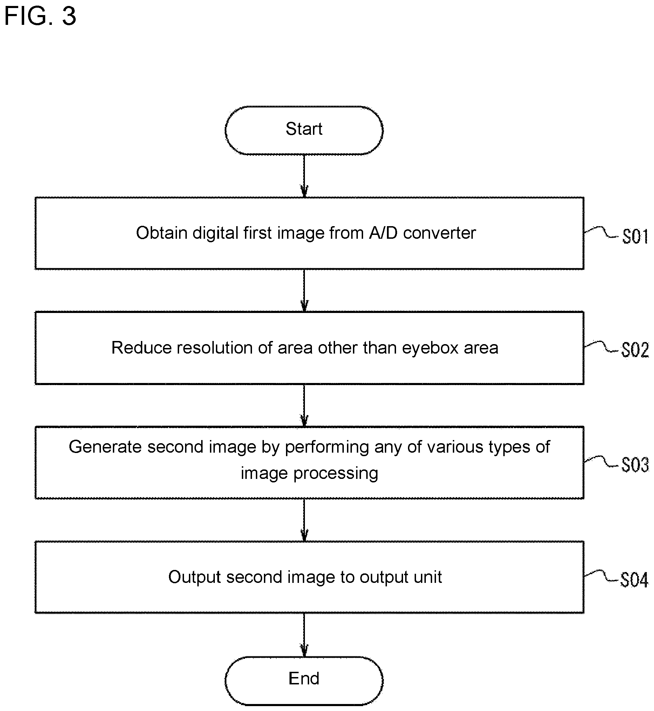

FIG. 3 is a flowchart of an example process performed by the digital signal processor 15.

The digital signal processor 15 obtains the first image as digital signals resulting from the conversion by the A/D converter 14 (step S01).

In the first stage of processing, the digital signal processor 15 reduces the resolution of the area other than the predefined eyebox area 33 (step S02). The resolution may be reduced by partially reducing information about the pixels of the digital first image in accordance with a predetermined rule. The digital signal processor 15 does not change the resolution of the area of the first image including the eyebox area 33.

In the second stage of processing, the digital signal processor 15 generates a second image resulting from any of various types of image processing on the image having the reduced resolution of the area other than the eyebox area 33 (step S03). The image processing may include color interpolation, color correction, brightness correction, and noise reduction.

The digital signal processor 15 outputs the second image to the output unit 16 (step S04).

The digital signal processor 15 reduces the image resolution of the area of the first image other than the eyebox area 33 in the first stage of processing in step S02. This allows the processing to be performed at higher speed in the second stage in step S03. The digital signal processor 15 reduces the image resolution of the area other than the eyebox area 33 to produce the second image with a reduced entire volume of information.

The output unit 16 is an output interface of the camera 10 and may include a communication circuit such as a large-scale integration (LSI) circuit for wired or wireless communication, a connector, and an antenna. The output unit 16 outputs, to the HUD 20, the image signals of the second image resulting from the image processing with the digital signal processor 15. The output unit 16 processes the image signals to be output to the HUD 20 with a protocol for communication with the HUD 20. The output unit 16 may output, to the HUD 20, the image signals in a wired or wireless manner or through a communication network such as a controller area network (CAN).

The camera controller 17 can control the image sensor 12, the analog signal processor 13, the A/D converter 14, the digital signal processor 15, and the output unit 16. The camera controller 17 includes one or more processors.

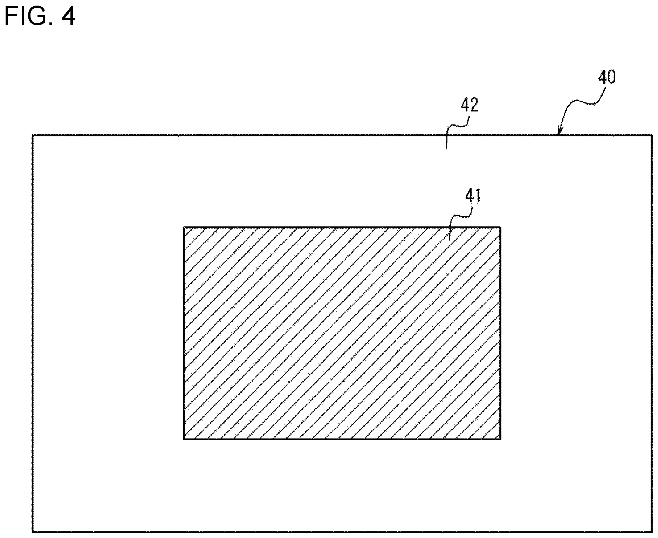

As shown in FIG. 4, a second image 40 output from the camera 10 includes a high-resolution area 41 and a low-resolution area 42. The high-resolution area 41 is the area including the eyebox area 33. The eyebox area 33 is the area within which a virtual image displayable by the HUD 20 is viewable. The low-resolution area 42 is the area other than the eyebox area 33. The high-resolution area 41 in the second image 40 from the camera 10 is predetermined based on the positional relationship between the camera 10 and the HUD 20. HUD

The HUD 20 in an embodiment includes a reflector 21, an optical member 22, and a display device 23. The reflector 21 and the optical member 22 form an optical system in the HUD 20. The optical system in the HUD 20 may include optical elements such as a lens and a mirror in addition to the reflector 21 and the optical member 22. In another embodiment, the optical system in the HUD 20 may include lenses without a reflector 21.

The reflector 21 reflects image light emitted from the display device 23 toward a predetermined area on the optical member 22. The predetermined area reflects image light toward the eyes 32 of the user 31. The predetermined area may be defined by the direction in which the eyes 32 of the user 31 are located relative to the optical member 22 and the direction in which image light is incident on the optical member 22. The reflector 21 may be a concave mirror.

The optical system including the reflector 21 may have a positive refractive index.

The optical member 22 reflects image light emitted from the display device 23 and reflected by the reflector 21 toward the left eye 32l and the right eye 32r of the user 31. For example, the movable object 30 may include a windshield as the optical member 22. The optical member 22 may include a plate-like combiner for head-up display inside the windshield. The HUD 20 thus directs light emitted from the display device 23 to the left eye 32l and the right eye 32r of the user 31 along an optical path P. The user 31 views light reaching the eyes along the optical path P as a virtual image.

Display Device

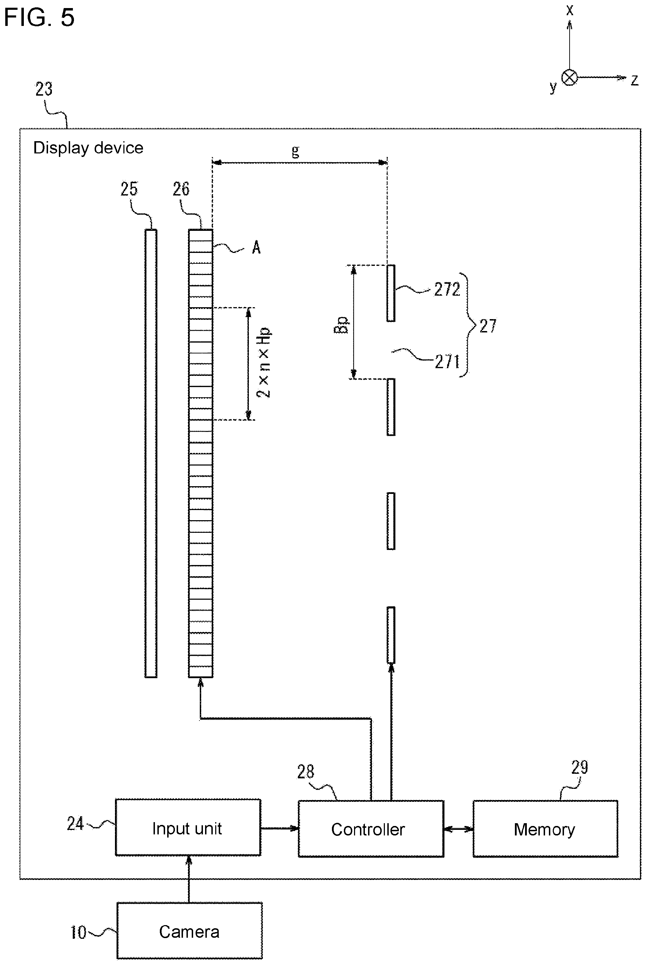

As shown in FIG. 5, the display device 23 may include an input unit 24, an illuminator 25, a display panel 26, a parallax barrier 27 as an optical element, a controller 28, and a memory 29.

The input unit 24 receives the second image 40 from the camera 10. The input unit 24 can communicate with the camera 10 in accordance with a predetermined communication scheme. The input unit 24 includes an interface for wired or wireless communication. The input unit 24 may include a communication circuit. The communication circuit may include a communication LSI circuit. The input unit 24 may include a connector for wired communication, such as an electrical connector or an optical connector. The input unit 24 may include an antenna for wireless communication.

The illuminator 25 illuminates the display panel 26 with planar illumination light. The illuminator 25 may include a light source, a light guide plate, a diffuser plate, and a diffuser sheet. The illuminator 25 emits, from the light source, illumination light that then spreads uniformly for illuminating the surface of the display panel 26 through, for example, the light guide plate, the diffuser plate, or the diffuser sheet. The illuminator 25 may emit the uniform light toward the display panel 26.

The display panel 26 may be, for example, a transmissive liquid crystal display panel. The display panel 26 is not limited to a transmissive liquid crystal panel but may be another display panel such as an organic electroluminescent (EL) display. For the display panel 26 being a self-luminous display panel, the display device 23 may not include the illuminator 25.

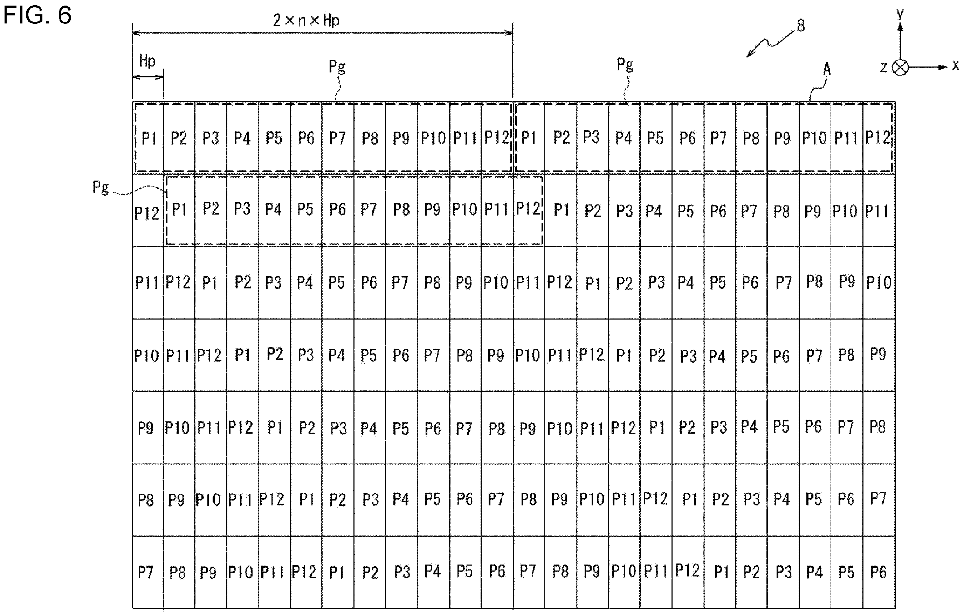

As shown in FIG. 6, the display panel 26 includes a planar active area A including multiple divisional areas. The active area A can display a parallax image. The parallax image includes a left eye image and a right eye image having parallax with the left eye image as described later. In the present embodiment, the left eye image is a first display image. The right eye image is a second display image. The divisional areas are defined in a first direction and in a second direction orthogonal to the first direction. The direction orthogonal to the first direction and the second direction is referred to as a third direction. The first direction may be referred to as a horizontal direction. The second direction may be referred to as a vertical direction. The third direction may be referred to as a depth direction. However, the first, second, and third directions are not limited to the directions referred to above. In FIGs. 5 to 7, the first direction refers to x-direction, the second direction to y-direction, and the third direction to z-direction.

Each divisional area corresponds to a subpixel. Thus, the active area A includes multiple subpixels arranged in a lattice in the horizontal direction and the vertical direction.

Each subpixel has one of the colors red (R), green (G), and blue (B). One pixel may be a set of three subpixels with R, G, and B. For example, multiple subpixels included in one pixel may be arranged in the horizontal direction. Multiple subpixels having the same color may be arranged, for example, in the vertical direction.

The multiple subpixels arranged in the active area A form subpixel groups Pg under control by the controller 28. Multiple subpixel groups Pg are arranged repeatedly in the horizontal direction. Each subpixel group Pg may be aligned with or shifted from the corresponding subpixel group Pg in the vertical direction. For example, the subpixel groups Pg are repeatedly arranged in the vertical direction at positions shifted by one subpixel in the horizontal direction from the corresponding subpixel group Pg in adjacent rows. The subpixel groups Pg each include multiple subpixels in predetermined rows and columns. More specifically, the subpixel groups Pg each include $(2 \times n \times b)$ subpixels P1 to PN ($N = 2 \times n \times b$), which are consecutively arranged in b rows in the vertical direction and in $(2 \times n)$ columns in the horizontal direction. In the example shown in FIG. 6, n is 6, and b is 1. The active area A includes the subpixel groups Pg each including 12 subpixels P1 to P12 consecutively arranged in one row in the vertical direction and in 12 columns in the horizontal direction. In the example shown in FIG. 6, some of the subpixel groups Pg are denoted by reference signs.

Each subpixel group Pg is the smallest unit controllable by the controller 28 to display an image. The subpixels included in each subpixel group Pg are identified using the identification information P1 to PN ($N = 2 \times n \times b$). The subpixels P1 to PN ($N = 2 \times n \times b$) included in each subpixel group Pg with the same identification information are controlled by the controller 28 at the same time. For example, the controller 28 can switch the image to be displayed by the multiple subpixels P1 from the left eye image to the right eye image at the same time in all the subpixel groups Pg.

As shown in FIG. 5, the parallax barrier 27 is planar along the active area A. The parallax barrier 27 is separate from the active area A by a predetermined distance (gap) g. The parallax barrier 27 may be located opposite to the illuminator 25 from the display panel 26. The parallax barrier 27 may be located between the display panel 26 and the illuminator 25.

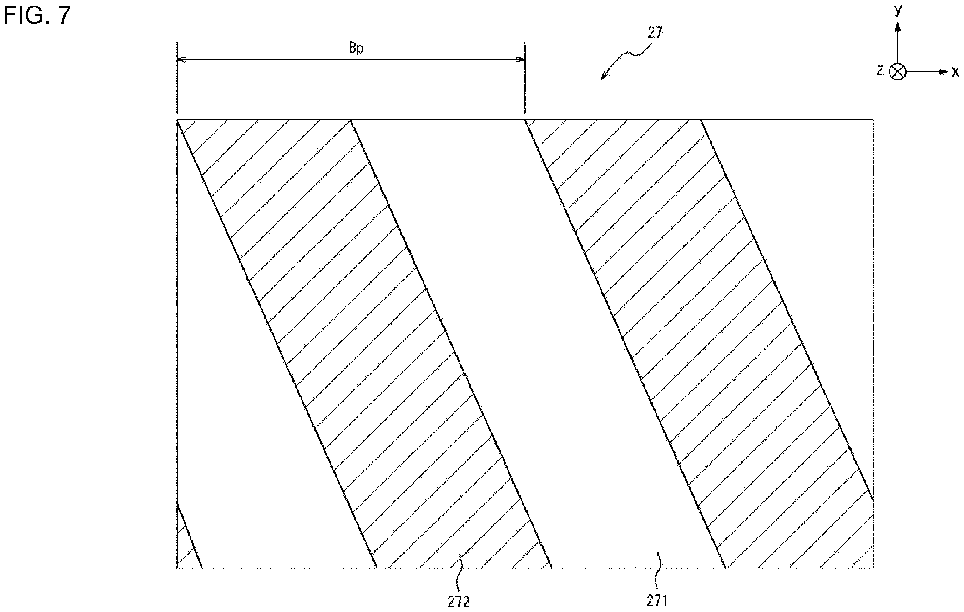

The parallax barrier 27 defines the traveling direction of image light emitted from the subpixels for each of multiple transmissive portions 271. As shown in FIG. 7, the transmissive portions 271 are strip areas each elongated in a predetermined direction in the plane. More specifically, the parallax barrier 27 includes multiple light-reducing portions 272 for reducing image light. The light-reducing portions 272 define transmissive portions 271 between adjacent light-reducing portions 272. The transmissive portions 271 have a higher light transmittance than the light-reducing portions 272. The transmissive portions 271 may have a light transmittance 10 or more times, or 100 or more times, or 1000 or more times the light transmittance of the light-reducing portions 272. The light-reducing portions 272 have a lower light transmittance than the transmissive portions 271. The light-reducing portions 272 may block image light.

The transmissive portions 271 and the light-reducing portions 272 extend in a predetermined direction along the active area A. The transmissive portions 271 and the light-reducing portions 272 are arranged alternately in a direction orthogonal to the predetermined direction. For example, the predetermined direction is along a diagonal of the subpixels when the display panel 26 and the parallax barrier 27 are viewed in the depth direction (z-direction). For example, the predetermined direction may be the direction that crosses t subpixels in y-direction while crossing s subpixels in x-direction (s and t are relatively prime positive integers) when the display panel 26 and the parallax barrier 27 are viewed in the depth direction (z-direction). The predetermined direction may be y-direction. The predetermined direction corresponds to the direction in which the subpixel groups Pg are arranged. In the example shown in FIG. 6, each subpixel group Pg is shifted from the corresponding subpixel group Pg by one subpixel in the second direction and by one subpixel in the first direction. Thus, s is 1, and t is 1.

The parallax barrier 27 may be formed from a film or a plate. In this case, the light-reducing portions 272 are parts of the film or plate. The transmissive portions 271 may be slits in the film or plate. The film may be formed from resin or another material. The plate may be formed from resin, metal, or another material. The parallax barrier 27 may be formed from a material other than a film or a plate. The parallax barrier 27 may include a base formed from a light-reducing material or a material containing an additive with light-reducing properties.

The parallax barrier 27 may include a liquid crystal shutter. The liquid crystal shutter can control the light transmittance in accordance with a voltage applied. The liquid crystal shutter may include multiple pixels and control the light transmittance for each pixel. The transmissive portions 271 and the light-reducing portions 272 are defined by the liquid crystal shutter and at positions corresponding to the pixels of the liquid crystal shutter. For the parallax barrier 27 including the liquid crystal shutter, the boundaries between the transmissive portions 271 and the light-reducing portions 272 may be staggered along the shapes of the pixels.

Image light emitted from the active area A on the display panel 26 partially transmits through the transmissive portions 271 and is reflected by the reflector 21 to reach the optical member 22. The image light is reflected by the optical member 22 and reaches the eyes 32 of the user 31. This allows the eyes 32 of the user 31 to view a first virtual image V1 frontward from the optical member 22. The first virtual image V1 is a virtual image of the image displayed on the active area A. The plane on which the first virtual image V1 is projected is referred to as a virtual image plane Sv. Being frontward herein refers to the direction in which the optical member 22 is located as viewed from the user 31. Being frontward is typically the direction of movement of the movable object 30. As shown in FIG. 8, a second virtual image V2, which is a virtual image of the parallax barrier 27, appears to define the direction of image light from the first virtual image V1, and the user 31 views such an image.

The user 31 thus views the image appearing as the first virtual image V1 through the second virtual image V2. In reality, the user 31 does not view the second virtual image V2, or a virtual image of the parallax barrier 27. However, the second virtual image V2 is hereafter referred to as appearing at the position at which the virtual image of the parallax barrier 27 is formed and as defining the traveling direction of image light from the first virtual image V1. Areas in the first virtual image V1 viewable by the user 31 with image light reaching the positions of the eyes 32 of the user 31 are hereafter referred to as viewable areas Va. Areas in the first virtual image V1 viewable by the user 31 with image light reaching the position of the left eye 321 of the user 31 are referred to as left viewable areas VaL. Areas in the first virtual image V1 viewable by the user 31 with image light reaching the position of the right eye 32r of the user 31 are referred to as right viewable areas VaR.

As shown in FIG. 8, a virtual image barrier pitch VBp and a virtual image gap Vg are determined to satisfy Formula 1 and Formula 2 below using an optimum viewing distance Vd.

$$E:Vd = (n \times VHp):Vg \qquad (1)$$

$$Vd:VBp = (Vdv + Vg):(2 \times n \times VHp) \qquad (2)$$

The virtual image barrier pitch VBp is the interval at which the light-reducing portions 272 projected as the second virtual image V2 are arranged in a direction corresponding to u-direction. The virtual image gap Vg is the distance between the second virtual image V2 and the first virtual image V1. The optimum viewing distance Vd is the distance between the virtual image V2 of the parallax barrier 27 and the position of the left eye 32l or the right eye 32r of the user 31 indicated by positional information obtained from the camera 10. An interocular distance E is the distance between the left eye 32l and the right eye 32r. The interocular distance E may be, for example, 61.1 to 64.4 mm, as calculated through studies conducted by the National Institute of Advanced Industrial Science and Technology. VHp is the horizontal length of each subpixel of the virtual image. VHp is the length of each subpixel of the first virtual image V1 in a direction corresponding to the first direction.

As described above, the left viewable areas VaL in FIG. 8 are defined on the virtual image plane Sv and viewable by the left eye 32l of the user 31 when image light transmitted through the transmissive portions 271 of the parallax barrier 27 reaches the left eye 32l of the user 31. As described above, the right viewable areas VaR are defined on the virtual image plane Sv and viewable by the right eye 32r of the user 31 when image light transmitted through the transmissive portions 271 of the parallax barrier 27 reaches the right eye 32r of the user 31.

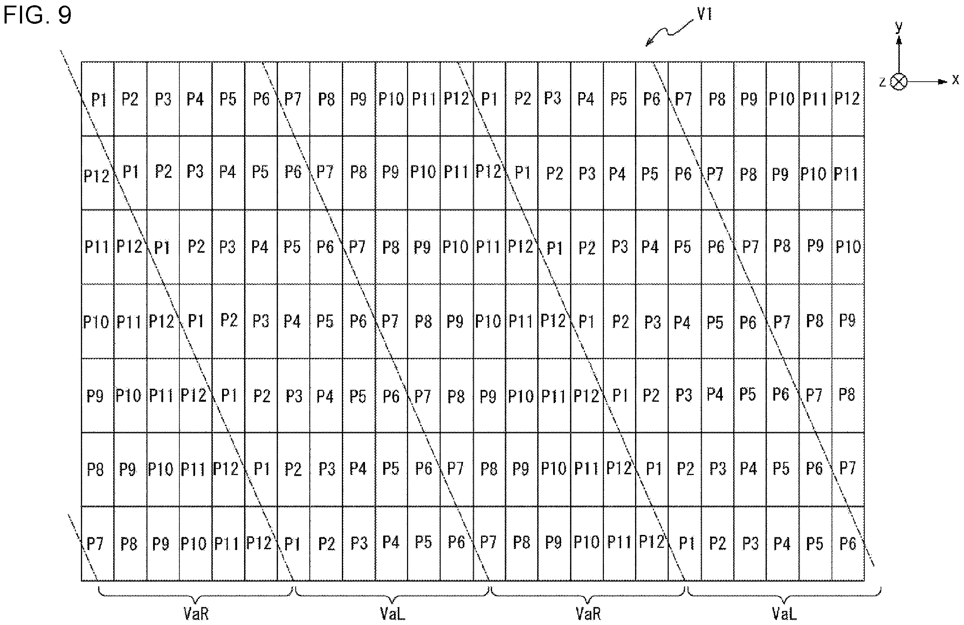

FIG. 9 shows an example array of subpixels of the first virtual image V1 as viewed from the left eye 32l and the right eye 32r of the user 31 using the parallax barrier 27 with an aperture ratio of 50%. The parallax barrier 27 with an aperture ratio of 50% includes the transmissive portions 271 and the light-reducing portions 272 each having the same width in the interocular direction (x-direction). In FIG. 9, the dot-and-dash lines indicate a virtual image at the boundaries between the transmissive portions 271 and the light-reducing portions 272 in the parallax barrier 27. The left viewable areas VaL viewable by the left eye 32l and the right viewable areas VaR viewable by the right eye 32r extend diagonally with respect to x-and y-directions between the two-dot chain lines. The right viewable areas VaR are not viewable by the left eye 32l. The left viewable areas VaL are not viewable by the right eye 32r.

In the example shown in FIG. 9, each left viewable area VaL includes the virtual image of the full area of each of the subpixels P2 to P5 arranged in the active area A and a maj or area of each of the subpixels P1 and P6 arranged in the active area A. The virtual image of the subpixels P7 to P12 arranged in the active area A is less easily viewable by the left eye 32l of the user 31. Each right viewable area VaR includes the virtual image of the full area of each of the subpixels P8 to P11 arranged in the active area A and a major area of each of the subpixels P7 and P12 arranged in the active area A. The virtual image of the subpixels P1 to P6 arranged in the active area A is less easily viewable by the right eye 32r of the user 31. The controller 28 can cause the subpixels P1 to P6 to display the left eye image. The controller 28 can cause the subpixels P7 to P12 to display the right eye image. This allows the left eye 32l of the user 31 to mainly view the virtual image of the left eye image on the left viewable areas VaL and allows the right eye 32r to mainly view the virtual image of the right eye image on the right viewable areas VaR. As described above, the left eye image and the right eye image are parallax images having parallax between them. The user 31 views the left eye image and the right eye image as a 3D image.

The controller 28 may be connected to each of the components of the HUD system 100 to control these components. The components controlled by the controller 28 include the camera 10 and the display panel 26. The controller 28 may be, for example, a processor. The controller 28 may include one or more processors. The processors may include a general-purpose processor that reads a specific program and performs a specific function, and a processor dedicated to specific processing. The dedicated processor may include an application-specific integrated circuit (ASIC). The processor may include a programmable logic device (PLD). The PLD may include a field-programmable gate array (FPGA). The controller 28 may be either a system on a chip (SoC) or a system in a package (SiP) in which one or more processors cooperate with other components. The controller 28 may include a storage to store various items of information or programs to operate each component of the HUD system 100. The storage may be, for example, a semiconductor memory. The storage may serve as a work memory for the controller 28.

The memory 29 may include any storage device such as a random-access memory (RAM) or a read-only memory (ROM). The memory 29 stores information received by the input unit 24, information resulting from conversion by the controller 28, and other information. Control of Image Displayed by Display Panel

The controller 28 can detect the positions of the left eye 32l and the right eye 32r of the user 31 based on the second image 40 obtained from the camera 10 through the input unit 24. As described below, the controller 28 causes the display panel 26 to display the right eye image and the left eye image having parallax between them based on information about the positions of the left eye 32l and the right eye 32r. The controller 28 switches the image to be displayed by the subpixels on the display panel 26 between the right eye image and the left eye image.

As described above, the left viewable areas VaL of the first virtual image V1 viewable by the left eye 32l of the user 31 may be located at the positions shown in FIG. 9. In this case, the controller 28 can cause the subpixels P1 to P6 to display the left eye image. The right viewable areas VaR of the first virtual image V1 viewable by the right eye 32r of the user 31 may be located at the positions shown in FIG. 9. In this case, the controller 28 can cause the subpixels P7 to P12 to display the right eye image. In another embodiment, the controller 28 can cause the subpixels P2 to P5 to display the left eye image, cause the subpixels P8 to P11 to display the right eye image, and cause the other subpixels P1, P6, P7, and P12 to display a black image with a luminance value of 0. This structure can reduce crosstalk effectively.

A change in the positions of the eyes 32 of the user 31 changes the parts of the subpixels P1 to P12 used to display the virtual image viewable by the left eye 32l and the right eye 32r of the user 31. The controller 28 determines the subpixels to display the left eye image and the subpixels to display the right eye image among the subpixels P1 to P12 in each subpixel group Pg in accordance with the positions of the eyes 32 of the user 31. For the subpixels determined to display the left eye image, the controller 28 causes these subpixels to display the left eye image. For the subpixels determined to display the right eye image, the controller 28 causes these subpixels to display the right eye image.

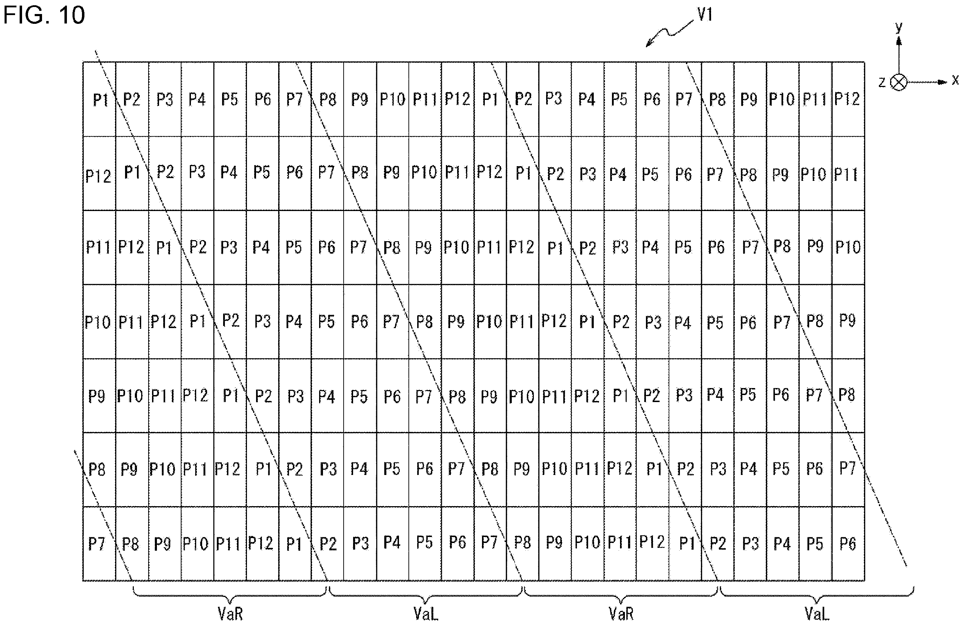

For example, the eyes 32 of the user 31 observing the first virtual image V1 as shown in FIG. 9 may move relatively to the left. This causes the second virtual image V2, or a virtual image of the parallax barrier 27, to move to the right. As shown in FIG. 10, for example, the virtual image at the boundaries between the transmissive portions 271 and the light-reducing portions 272 of the parallax barrier 27 may move to the right as viewed from the user 31. This causes the left viewable areas VaL and the right viewable areas VaR to also move to the right. In the example shown in FIG. 10, each left viewable area VaL includes the full area of each of the subpixels P3 to P6 and a major area of each of the subpixels P2 and P7. Each right viewable area VaR includes the full area of each of the subpixels P9 to P12 and a major area of each of the subpixels P8 and P1. The controller 28 can thus cause the subpixels P2 to P7 on the display panel 26 to display the left eye image. The controller 28 can cause the subpixels P1 and P8 to P12 on the display panel 26 to display the right eye image. In other words, the image displayed by the subpixels P1 is switched from the left eye image to the right eye image in response to a change in the positions of the eyes 32 of the user 31. Similarly, the image displayed by the subpixels P7 is switched from the right eye image to the left eye image.

The controller 28 controls the display panel 26 to allow the left eye image and the right eye image to be projected as a 3D image in the field of view of the user 31. The controller 28 causes the controller 28 to display an image of a target 3D object included in the left eye image and the right eye image with intended parallax between these images. The controller 28 may cause the display panel 26 to display images with parallax between them prestored in the memory 29. The controller 28 may calculate the parallax based on the distance to the 3D object to be displayed in the 3D image in real time, and use the parallax to generate the left eye image and the right eye image to be displayed by the display panel 26.

The eyebox area 33 shown in FIG. 1 is defined by, for example, the position of the display device 23, the directions of image light of the left eye image and the right eye image, the shape, position, and orientation of the reflector 21, and the shape, position, and orientation of the optical member 22. The eyebox area 33 is an area that can be reached by image light of the left eye image and the right eye image emitted from the display device 23, and is spaced from the second virtual image V2 by the optimum viewing distance Vd satisfying Formulas 1 and 2 or near such an area. With the eyes 32 within the eyebox area 33, the user 31 can view the 3D image displayed by the HUD 20.

To detect the positions of the eyes 32 of the user 31, the controller 28 in the display device 23 detects the pupil positions of the eyes 32 of the user 31 in the high-resolution area 41 including the eyebox area 33. To switch images in units of subpixels based on the pupil positions of the user 31 as described above, the HUD 20 uses a high-resolution image that allows detection of the pupil positions.

The camera 10 mounted on the vehicle may output image information to devices other than the HUD 20. The devices other than the HUD 20 include a driver monitor for monitoring the driver's driving condition. For example, the driver monitor can monitor the movement of the driver's head or eyelids and alert the driver with sound or vibration upon detection of a potentially dangerous driving condition such as drowsiness of the user 31. To determine drowsiness of the user 31, the driver monitor uses an image of the eyebox area 33 and also uses an image of the area other than the eyebox area 33. Images used by the driver monitor may not have a resolution as high as to allow detection of the pupils of the eyes 32 of the user 31.

In the present embodiment, the second image 40 includes the low-resolution area 42 as the area other than the eyebox area 33. Image information with a reduced volume can thus be transmitted from the output unit 16 in the camera 10 to the input unit 24 in the display device 23. This structure can reduce the delay or latency in communicating image information. The HUD system 100 can thus reduce the delay in processing while accurately detecting the eye positions with the camera 10. The positions of the eyes 32 can thus be detected with higher detection performance.

In the present embodiment, the digital signal processor 15 in the camera 10 reduces the resolution of the area of the first image other than the eyebox area 33 in the first stage before performing any of various types of image processing in the second stage. This allows faster image processing in the second stage including color interpolation, color correction, brightness correction, and noise reduction.

In the present embodiment, the same camera 10 may be used for the HUD 20 and a device other than the HUD 20. For the HUD 20, the camera 10 detects the eyes 32 of the user 31 using a limited part of the entire image, or the high-resolution area 41. For a device other than the HUD 20 that does not use a high-resolution image of the user 31, the camera 10 uses the entire second image 40 including the low-resolution area 42 with a lower resolution. The entire system including the HUD system 100 thus has higher performance with less delay in processing.

Other Example Structures of HUD System

In the above embodiments, the eyebox area 33 is a fixed predefined area. In this case, the eyebox area 33 is to be defined as a large area in which the eyes 32 can be located to accommodate different sitting heights and driving postures of the user 31. However, the setting of the eyebox area 33 may be limited by, for example, the layout of the optical system in the HUD 20. In this case, the HUD 20 may include an adjuster for adjusting the position of the eyebox area 33 in accordance with the positions of the eyes 32 of the user 31.

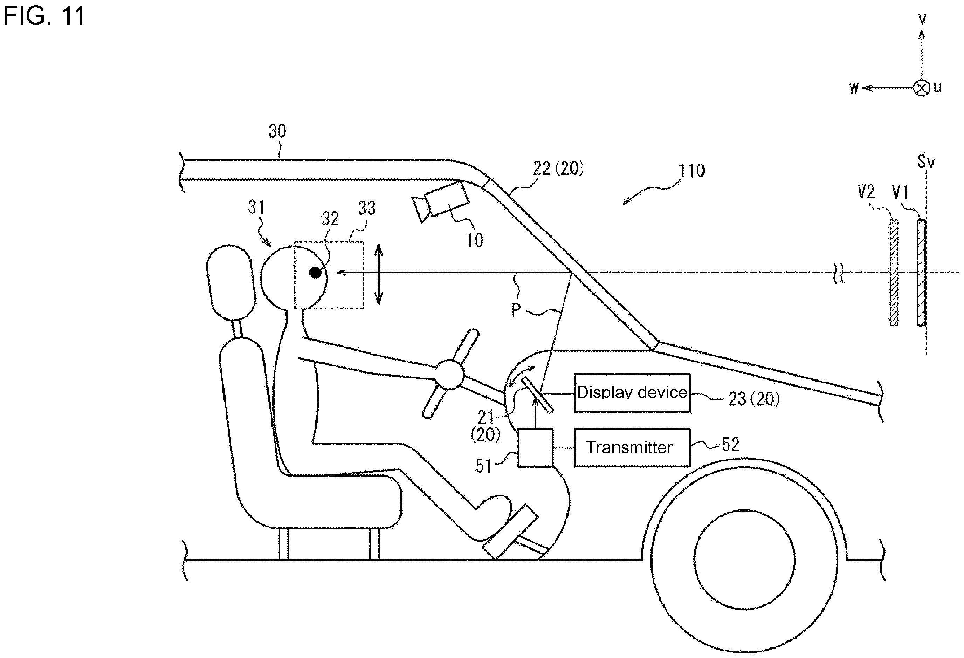

FIG. 11 shows a HUD system 110 according to another embodiment of the present disclosure. In FIG. 11, the components the same as or similar to those of the HUD system 100 in FIG. 1 are given the same names and reference numerals as the corresponding components in FIG. 1. Unless otherwise specified, the components with the same reference numerals as in FIG. 1 have the same structures and functions as the corresponding components in FIG. 1.

The HUD system 110 includes a reflector 21 with its position or orientation or both adjustable in accordance with the positions of the eyes 32 of the user 31. The HUD 20 includes an adjuster 51 for adjusting either or both the position and the orientation of the reflector 21. The adjuster 51 includes a drive. The drive may be a stepper motor. The adjuster 51 may be driven by a manual operation performed by the user 31. The adjuster 51 may be controlled by the controller 28 based on the positions of the eyes 32 obtained by the display device 23 from the camera 10. The HUD 20 may include a transmitter 52 for outputting information about the position of the eyebox area 33 to the camera 10. The information about the position of the eyebox area 33 is, for example, information about the reflector 21 being driven by the adjuster 51. The transmitter 52 includes a communication interface for transmitting information to the camera 10 in a wired or wireless manner.

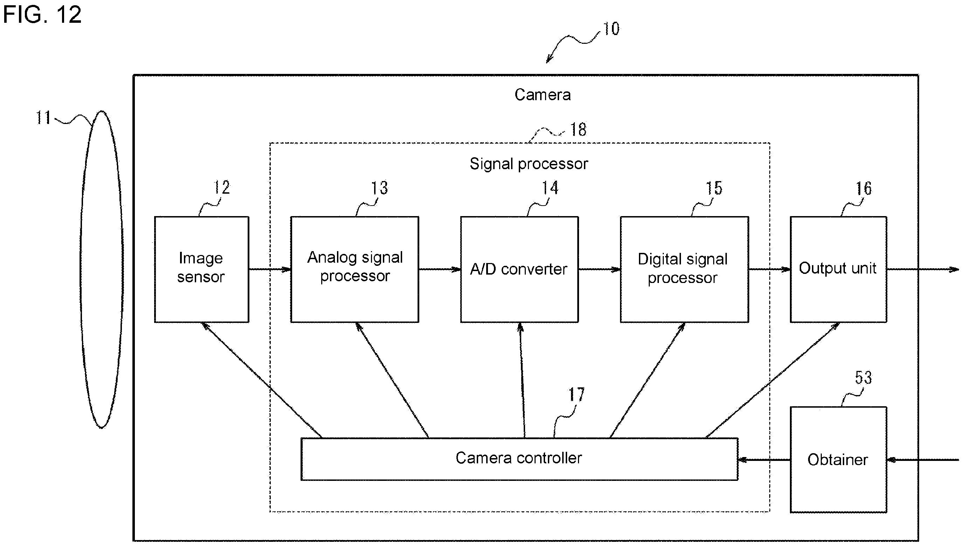

As shown in FIG. 12, the camera 10 includes an obtainer 53 for obtaining information about the position of the eyebox area 33. The obtainer 53 includes a communication interface corresponding to the transmission scheme of the transmitter 52. The camera controller 17 updates information about the area including the eyebox area 33 stored in the digital signal processor 15 based on the information about the position of the eyebox area 33 obtained from the obtainer 53. The digital signal processor 15 generates a second image by reducing the resolution of the area other than the eyebox area 33 based on the information about the position of the eyebox area 33 obtained from the obtainer 53.

The system with the above structure can define the eyebox area 33 at an appropriate position independently of the sitting height and the driving posture of the user 31. The digital signal processor 15 can thus generate the second image 40 including the high-resolution area 41 including the defined eyebox area 33 and the low-resolution area 42 other than the eyebox area 33. The HUD system 110 can thus reduce the delay in processing while accurately detecting the eye positions with the camera 10, as in the embodiment shown in FIG. 1.

The movable object according to one or more embodiments of the present disclosure includes a vehicle, a vessel, or an aircraft. The vehicle according to one or more embodiments of the present disclosure includes, but is not limited to, an automobile or an industrial vehicle, and may also include a railroad vehicle, a community vehicle, or a fixed-wing aircraft traveling on a runway. The automobile includes, but is not limited to, a passenger vehicle, a truck, a bus, a motorcycle, or a trolley bus, and may also include another vehicle traveling on a road. The industrial vehicle includes an agricultural vehicle or a construction vehicle. The industrial vehicle includes, but is not limited to, a forklift or a golf cart. The agricultural vehicle includes, but is not limited to, a tractor, a cultivator, a transplanter, a binder, a combine, or a lawn mower. The construction vehicle includes, but is not limited to, a bulldozer, a scraper, a power shovel, a crane vehicle, a dump truck, or a road roller. The vehicle includes a man-powered vehicle. The classification of the vehicle is not limited to the above. For example, the automobile may include an industrial vehicle traveling on a road, and one type of vehicle may fall within a plurality of classes. The vessel according to one or more embodiments of the present disclosure includes a jet ski, a boat, or a tanker. The aircraft according to one or more embodiments of the present disclosure includes a fixed-wing aircraft or a rotary-wing aircraft.

Although embodiments of the present disclosure have been described with reference to the drawings and examples, those skilled in the art can easily make various modifications or alterations based on one or more embodiments of the present disclosure. Such modifications or alterations also fall within the scope of the present disclosure. For example, the functions of the components or steps are reconfigurable unless any contradiction arises. A plurality of components or steps may be combined into a single unit or step, or a single component or step may be divided into separate units or steps. The embodiments of the present disclosure can also be implemented as a method or a program implementable by a processor included in the device, or as a storage medium storing the program. These method, program, and storage medium also fall within the scope of the present disclosure.

In the present disclosure, the first, the second, or others are identifiers for distinguishing the components. The identifiers of the components distinguished with the first, the second, and others in the present disclosure are interchangeable. For example, the first lens can be interchangeable with the second lens. The identifiers are to be interchanged together. The components for which the identifiers are interchanged are also to be distinguished from one another. The identifiers may be eliminated. The components without such identifiers can be distinguished with reference numerals. The identifiers such as the first and the second in the present disclosure alone should not be used to determine the orders of the components or to determine the existence of smaller or larger number identifiers.

In the present disclosure, x-direction, y-direction, and z-direction are used for ease of explanation and may be interchangeable with one another. The orthogonal coordinate system including axes in x-direction, y-direction, and z-direction is used to describe the structures according to the present disclosure. The positional relationship between the components in the present disclosure is not limited to the orthogonal relationship. The same applies to u-direction, v-direction, and w-direction.

In the above embodiments, the optical element that defines the traveling direction of image light is a parallax barrier. However, the optical element is not limited to a parallax barrier. The optical element may be a lenticular lens.

In the above embodiments, the positions of the eyes 32 of the user 31 are detected by the controller 28 in the display device 23 based on the second image 40. The positions of the eyes 32 of the user 31 may be detected by the camera 10 based on the second image 40 generated by the digital signal processor 15. For example, the camera 10 may define a predetermined position as the origin and detect the direction and amount of displacement of the positions of the eyes 32 from the origin. The camera 10 may detect the positions of the eyes 32 of the user 31 and transmit, from the output unit 16, information indicating the positions of the eyes 32 to the input unit 24 in the display device 23. The controller 28 can control the display panel 26 in accordance with the obtained information indicating the positions of the eyes 32.

The present disclosure may be implemented in the following forms.

A camera according to one or more embodiments of the present disclosure includes an image sensor, a signal processor, and an output unit. The image sensor obtains a first image being a subject image including an eye of a user of a head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display.

A head-up display system according to one or more embodiments of the present disclosure includes a camera and a head-up display. The camera includes an image sensor, a signal processor, and an output unit. The image sensor obtains a first image being a subject image including an eye of a user of the head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display. The head-up display includes a display panel, an optical element, an optical system, a receiver, and a processor. The display panel displays a display image. The optical element defines a traveling direction of image light emitted from the display panel. The optical system directs the image light traveling in the traveling direction defined by the optical element toward the eye of the user and projects a virtual image of the display image in a field of view of the user. The receiver receives the second image output from the output unit. The processor causes the display panel to display the display image including a first display image and a second display image having parallax between the first display image and the second display image. The processor changes, based on a position of the eye of the user detected using the second image received from the camera, an area on the display panel on which the first display image is displayed and an area on the display panel on which the second display image is displayed.

A movable object according to one or more embodiments of the present disclosure includes a head-up display system. The head-up display system includes a camera and a head-up display. The camera includes an image sensor, a signal processor, and an output unit. The image sensor obtains a first image being a subject image including an eye of a user of the head-up display. The signal processor generates a second image by reducing a resolution of an area of the first image other than an eyebox area. The eyebox area is an area within which a virtual image displayable by the head-up display is viewable by the eye of the user. The output unit outputs the second image to the head-up display. The head-up display includes a display panel, an optical element, an optical system, a receiver, and a processor. The display panel displays a display image. The optical element defines a traveling direction of image light emitted from the display panel. The optical system directs the image light traveling in the traveling direction defined by the optical element toward the eye of the user and projects a virtual image of the display image in a field of view of the user. The receiver receives the second image output from the output unit. The processor causes the display panel to display the display image including a first display image and a second display image having parallax between the first display image and the second display image. The processor changes, based on a position of the eye of the user detected using the second image received from the camera, an area on the display panel on which the first display image is displayed and an area on the display panel on which the second display image is displayed.

The camera, the HUD system, and the movable object including the HUD system according to one or more embodiments of the present disclosure can detect the eye positions with higher detection performance.

The present disclosure may be embodied in various forms without departing from the spirit or the main features of the present disclosure. The embodiments described above are thus merely illustrative in all respects. The scope of the present disclosure is defined not by the description given above but by the claims. Any modifications and alterations contained in the claims fall within the scope of the present disclosure.

Reference Signs List

| | |
|---|---|
| 10 | camera |
| 11 | lens |
| 12 | image sensor |
| 13 | analog signal processor |
| 14 | analog-digital converter |
| 15 | digital signal processor |
| 16 | output unit |
| 17 | camera controller |
| 18 | signal processor |
| 20 | head-up display (HUD) |
| 21 | reflector (optical system) |
| 22 | optical member (optical system) |
| 23 | display device |
| 24 | input unit |
| 25 | illuminator |
| 26 | display panel |
| 27 | parallax barrier |
| 28 | controller |
| 29 | memory |
| 30 | movable object |
| 31 | user |
| 32 | eye |
| 32l | left eye (first eye) |
| 32r | right eye (second eye) |
| 33 | eyebox area |
| 40 | camera image |
| 41 | high-resolution area |
| 42 | low-resolution area |
| 51 | adjuster |
| 52 | transmitter |
| 53 | obtainer |
| 100, 110 | HUD system |
| 271 | transmissive portion |
| 272 | light-reducing portion |
| A | active area |
| Is | 3D object |
| Sv | virtual image plane |
| V1 | first virtual image |
| V2 | second virtual image |
| VaL | left viewable area |
| VaR | right viewable area |

**Claims**

1.  A camera, comprising:

    an image sensor configured to obtain a first image being a subject image including an eye of a user of a head-up display;
    a signal processor configured to generate a second image by reducing a resolution of an area of the first image other than an eyebox area, the eyebox area being an area within which a virtual image displayable by the head-up display is viewable by the eye of the user; and
    an output unit configured to output the second image to the head-up display.

**2.** The camera according to claim 1, wherein
the signal processor generates the second image by reducing the resolution of the area of the first image other than the eyebox area and then performing at least one type of image processing.

**3.** The camera according to claim 1 or claim 2, wherein
the output unit outputs the second image to a device other than the head-up display.

**4.** The camera according to any one of claims 1 to 3, wherein
the first image has a resolution to allow detection of a pupil position of the eye of the user.

**5.** The camera according to any one of claims 1 to 4, further comprising:

an obtainer configured to obtain information about a position of the eyebox area,
wherein the signal processor generates the second image based on the information about the position of the eyebox area obtained from the obtainer.

**6.** A head-up display system, comprising:

a camera; and
a head-up display,
the camera including

an image sensor configured to obtain a first image being a subject image including an eye of a user of the head-up display,
a signal processor configured to generate a second image by reducing a resolution of an area of the first image other than an eyebox area, the eyebox area being an area within which a virtual image displayable by the head-up display is viewable by the eye of the user, and
an output unit configured to output the second image to the head-up display,

the head-up display including

a display panel configured to display a display image,
an optical element configured to define a traveling direction of image light emitted from the display panel,
an optical system configured to direct the image light traveling in the traveling direction defined by the optical element toward the eye of the user and to project a virtual image of the display image in a field of view of the user,
a receiver configured to receive the second image output from the output unit, and
a processor configured to cause the display panel to display the display image including a first display image and a second display image having parallax between the first display image and the second display image,

wherein the processor changes, based on a position of the eye of the user detected using the second image received from the camera, an area on the display panel on which the first display image is displayed and an area on the display panel on which the second display image is displayed.

**7.** A movable object, comprising:

a head-up display system including a camera and a head-up display,
the camera including

an image sensor configured to obtain a first image being a subject image including an eye of a user of the head-up display,
a signal processor configured to generate a second image by reducing a resolution of an area of the first image other than an eyebox area, the eyebox area being an area within which a virtual image displayable by the head-up display is viewable by the eye of the user, and
an output unit configured to output the second image to the head-up display,

the head-up display including

a display panel configured to display a display image,
an optical element configured to define a traveling direction of image light emitted from the display panel,
an optical system configured to direct the image light traveling in the traveling direction defined by the optical element toward the eye of the user and to project a virtual image of the display image in a field of view of the user,
a receiver configured to receive the second image output from the output unit, and
a processor configured to cause the display panel to display the display image including a first display image and a second display image having parallax between the first display image and the second display image,

wherein the processor changes, based on a position of the eye of the user detected using the second image received from the camera, an area on the display panel on which the first display image is displayed and an area on the display panel on which the second display image is displayed.

FIG. 1

EP 4 040 788 A1

FIG. 2

FIG. 3

```
                    ┌──────────────┐
                    │    Start     │
                    └──────┬───────┘
                           │
                           ▼
┌──────────────────────────────────────────────────────┐
│      Obtain digital first image from A/D converter     │───S01
└──────────────────────────┬─────────────────────────────┘
                           │
                           ▼
┌──────────────────────────────────────────────────────┐
│      Reduce resolution of area other than eyebox area  │───S02
└──────────────────────────┬─────────────────────────────┘
                           │
                           ▼
┌──────────────────────────────────────────────────────┐
│  Generate second image by performing any of various    │
│             types of image processing                  │───S03
└──────────────────────────┬─────────────────────────────┘
                           │
                           ▼
┌──────────────────────────────────────────────────────┐
│           Output second image to output unit           │───S04
└──────────────────────────┬─────────────────────────────┘
                           │
                           ▼
                    ┌──────────────┐
                    │     End      │
                    └──────────────┘
```

FIG. 4

FIG. 5

EP 4 040 788 A1

FIG. 6

FIG. 7

# FIG. 8

FIG. 9

| | | | | | | | | | | | | | | | | | | | | | | | |
|---|---|---|---|---|---|---|---|---|---|---|---|---|---|---|---|---|---|---|---|---|---|---|---|
| P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 | P12 |
| P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 |
| P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 |
| P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 |
| P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 |
| P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 |
| P7 | P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 |

VaR    VaL    VaR    VaL

VI

EP 4 040 788 A1

FIG. 10

V1

| P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 | P12 |
|---|---|---|---|---|---|---|---|---|---|---|---|---|---|---|---|---|---|---|---|---|---|---|---|
| P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 | P11 |
| P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 | P10 |
| P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 | P9 |
| P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 | P8 |
| P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 | P7 |
| P7 | P8 | P9 | P10 | P11 | P12 | P1 | P2 | P3 | P4 | P5 | P6 | P7 | P8 | P9 | P10 | P11 | P12 | P1 | P2 | P3 | P4 | P5 | P6 |

VaR  VaL  VaR  VaL

## FIG. 11

FIG. 12

**INTERNATIONAL SEARCH REPORT**

International application No.

PCT/JP2020/034565

A. CLASSIFICATION OF SUBJECT MATTER
Int.Cl. H04N13/366(2018.01)i, H04N13/31(2018.01)i, H04N13/346(2018.01)i, H04N13/363(2018.01)i
FI: H04N13/366, H04N13/31, H04N13/346, H04N13/363
According to International Patent Classification (IPC) or to both national classification and IPC

B. FIELDS SEARCHED

Minimum documentation searched (classification system followed by classification symbols)
Int.Cl. H04N13/00, B60K35/00, G02B27/01, G02B30/00

Documentation searched other than minimum documentation to the extent that such documents are included in the fields searched
Published examined utility model applications of Japan    1922–1996
Published unexamined utility model applications of Japan    1971–2020
Registered utility model specifications of Japan    1996–2020
Published registered utility model applications of Japan    1994–2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2019-15823 A (KYOCERA CORPORATION) 31 January 2019 (2019-01-31), paragraphs [0015], [0021], [0027], [0044]–[0046], [0049]–[0056], [0063], [0064], fig. 1-9 | 1–7 |
| A | JP 2018-185439 A (KYOCERA CORPORATION) 22 November 2018 (2018-11-22), paragraphs [0014], [0017], [0021], [0047]–[0061], fig. 1-5, 7 | 1–7 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 November 2020 | 24 November 2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

| JP 2019-15823 A | 31 January 2019 | US 2020/0074896 A1 paragraphs [0081], [0087], [0097], [0114]-[0116], [0119]-[0126], [0133], [0134], fig. 3-11 EP 3554069 A1 KR 10-2019-0084086 A CN 110073658 A |
| JP 2018-185439 A | 22 November 2018 | US 2020/0049991 A1 paragraphs [0032], [0035], [0039], [0066]-[0080], fig. 1-5, 7 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018142610 A